# NEUE EUROPÄISCHE PATENTSCHRIFT

(11) **EP 1 780 243 B2**
(45) Veröffentlichungstag und Bekanntmachung des Hinweises auf die Entscheidung über den Einspruch: **13.07.2016**
(45) Hinweis auf die Patenterteilung: 03.09.2008
(21) Anmeldenummer: 06122741.9
(22) Anmeldetag: 23.10.2006
(51) Int. Cl.: C08L 97/02, C09J 11/06, C09J 161/20, C08L 61/20

(54) **BINDEMITTELZUSAMMENSETZUNG FÜR HOLZWERKSTOFFE**
BINDER COMPOSITION FOR WOOD MATERIALS
COMPOSITION DE LIANT POUR MATÉRIAUX À BASE DE BOIS

(30) Priorität: 27.10.2005 DE 102005051716
(43) Veröffentlichungstag der Anmeldung: 02.05.2007
(73) Patentinhaber: Fritz Egger GmbH & Co., 3105 Unterradlberg (AT)
(72) Erfinder: Geyer, Andreas, 3500 Krems an der Donau (AT)
(74) Vertreter: Cohausz & Florack

(56) Entgegenhaltungen:
- EP-A1- 1 072 645
- WO-A-03/076146
- DATABASE WPI Week 198108 Derwent Publications Ltd., London, GB; AN 1981-13112D XP002429654 & SU 737 238 B (CELLULOSE PAPER IND RES) 30. Juni 1980 (1980-06-30)
- DATABASE WPI Week 198315 Derwent Publications Ltd., London, GB; AN 1983-36652K XP002429655 & SU 933 849 B (LENINGRAD CELL-PAPER INS) 7. Juni 1982 (1982-06-07)
- DATABASE WPI Week 200340 Derwent Publications Ltd., London, GB; AN 2003-424287 XP002429656 & JP 2003 025314 A (EIDAI CO LTD) 29. Januar 2003 (2003-01-29)

## Beschreibung

Die Erfindung betrifft eine Bindemittelzusammensetzung zur Verleimung von Holzfasem und/oder -partikeln zu einem Holzwerkstoff sowie Holzwerkstoffe, die mit der Bindemittelzusammensetzung hergestellt sind. Beschrieben wird ferner ein Verfahren zur Herstellung von Holzwerkstoffen unter Verwendung der Bindemittelzusammensetzung und die Verwendung der Bindemittelzusammensetzung bei diesem Verfahren.

Die Herstellung von Holzwerkstoffen wie Spanplatten, Faserplatten (MDF, HDF etc.) und OSB-Platten erfolgt durch "Verkleben" von Holzteilchen (Spänen, Fasern, Strands) unter Anwendung thermischer Aushärtevorgänge von reaktiven Harzen. Unterschiedlichste Anforderungen bezüglich Qualität und Verarbeitung verfangen darüber hinaus den Einsatz spezieller Hydrophobierungsmittel. Ein bedeutendes Qualitätskriterium stellt die so genannte Quellung, also die durch Feuchtigkeitseinfluss bedingte Dickenzunahme der fertigen Platten, dar. Um diese möglichst gering zu halten, wird versucht eine gewisse Hydrophobie des Endproduktes zu erzielen.

Der gegenwärtige Stand der Technik in der Hydrophobierung von Holzwerkstoffen basiert auf der Zugabe von langkettigen Alkanen zur Leimflotte. Diese werden in Form einer wässrigen Emulsion technischer Paraffine eingesetzt, welche als Nebenprodukte der Erdölraffination anfallen.

Die bei der Hydrophobierung standardmäßig eingesetzten Paraffin-Emulsionen sind aufgrund der chemischen Eigenschaften von Alkanen unter den bei der Holzwerkstoff-Herstellung gegebenen Bedingungen nicht in der Lage, eine chemische Verbindung mit den zu hydrophobierenden Holzpartikeln bzw. Holzfasern einzugehen.

Nachteilig an den bekannten Paraffin-Emulsionen ist, dass keine Fixierung der Paraffine an der zu hydrophobierenden Matrix stattfindet.

SU 737238 B beschreibt eine Holzfaserplatte, die ein Alkylphenolaminharz als Bindemittel und Wachs enthält. Das Harz-/Wachsgemisch wird mit 5 % synthetischer Fettsäure vermischt. SU 933849 B beschreibt eine wässrige Zusammensetzung zum Verleimen von faserigen Materialien, wie beispielsweise Holzfaserplatten, die ein Alkylphenolamin-Harz und eine Fettsäureseife enthält JP 2003025314 A beschreibt die Herstellung von Holzfaserplatten und die Verwendung von N-substituiertem Fettsäureamid als Hydrophobierungsmittel und polymerem Methylenpolyphenolpolyisocianat als Bindemittel. WO 03/076146 A1 beschreibt ein Verfahren zum Herstellen einer mitteldichten Faserplatte unter Verwendung einer Versiegelungszusammensetzung, die eine Fettsäure als Trennmittel enthalten kann. Das Bindemittel wird mit den Holzfasern vor der Verfestigung vermischt Geeignete Bindemittel sind beispielsweise Melamin, Melamin-Harnstoff-Formaldehyd, Harnstoff-Formaldehyd, phenolische Isocyanat enthaltende oder acrylische Bindemittel. EP 1 072 645 A1 beschreibt einen Verbundwerkstoff mit Polyvinylbutyral als Bindemittel, das einen Anteil von mindestens 5 Gew.% einer Fettsäure enthält.

Aufgabe der Erfindung ist demnach, ein Hydrophobierungsmittel für ein Bindemittel bereitzustellen, das bei der Herstellung von Holzwerkstoffen durch Verleimung von Holzfasem und/oder Holzpartikeln zu verbesserten hydrophoben Eigenschaften des Holzwerkstoffs führt. Insbesondere sollen die Quellungseigenschaften des Holzwerkstoffs verbessert werden.

Diese Aufgabe wird erfindungsgemäß gelöst durch den Gegenstand der Anspruche 1 bis 5. säure.

Zur Lösung der der Erfindung zugrunde liegenden Aufgabe wird eine Verleimung von Holzfasern und/oder -partikeln zu einem Holzwerkstoff vorgeschlagen, wobei die Bindemittelzusammensetzung ein Reaktionsprodukt aus mindestens einem aminoplastbasierenden Bindemittel und mindestens einem Hydrophobierungsmittel ausgewählt aus der Gruppe bestehend aus ungesättigten Fettsäuren.

Die Aufgabe wird ferner durch einen Holzwerkstoff gelöst, der erhältlich ist durch Verleimen von Holzfasern und/oder Holzpartikeln mit einer Bindemittelzusammensetzung, die ein Reaktionsprodukt aus mindestens einem aminoplastbasierenden Bindemittel und mindestens einem Hydrophobierungsmittel ausgewählt aus der Gruppe bestehend aus ungesättigten Fettsäuren und enthält.

Beschrieben wird auch ein Verfahren zur Herstellung von Holzzwerktoffen gelöst, bei dem Holzfasem und/oder Holzpartikel mit einem aminoplastbasierenden Bindemittel versehen, die so versehenen Holzfasern und/oder Holzpartikel zu Span- oder Fasermatten geformt und die Span- oder Fasermatten bei erhöhter Temperatur zu Platten gepresst werden, wobei den Holzfasern und/oder Holzpartikeln vor, nach oder zusammen mit der Bindemittelzugabe eine ungesättigte Fettsäure als Hydrophobierungsmittel zugegeben wird.

Der erfindungsgemäß beanspruchten Lehre liegt die Idee zugrunde, die hydrophobe Komponente chemisch mit den Holzpartikeln, Holzfasern bzw. der Bindemittelkomponente zu verankern. Diese Verankerung führt zu einer Fixierung der hydrophoben Komponente an der zu hydrophobierenden Matrix sowie zu einer Verteilung, die theoretisch eine monomolekulare Schicht Ober dieser entstehen lässt und somit die Gesamtmenge des Hydrophobierungsmittels nutzt.

Als funktionelle Basis einer chemischen Verankerung des Hydrophobierungsmittels können reaktive Gruppen dienen, die in der Lage sind, mit Bestandteilen der Holzwerkstoffplatte eine chemische Verankerung einzugehen. Die hydrophobe Komponente kann aus den langen Kohlenwasserstoff-Resten von Fettsäuren bestehen.

Neben der höheren Effizienz chemisch modifizierter Fettsäuren durch die beiden oben angeführten Punkte weist dieses System aufgrund des Ersatzes der Paraffine durch nachwachsende Rohstoffe (Fettsäuren) auch ökologische Vorteile auf.

Unter Fettsäuren im Sinne der Erfindung werden ungesättigte Vertreter (Ölsäuren) von Alkancarbonsäuren verstanden. Vorzugsweise werden Fettsäuren mit 5 bis 30 Kohlenstoffatomen und besonders bevorzugterweise solche mit 7 bis 15 Kohlenstoffatomen (mittlere Fettsäuren), eingesetzt.

Erfindungsgemäß besonders geeignete Fettsäuren sind Sojaölfettsäure und Fettsäure aus der Tallharz-herstellung.

Fettsäuren sind im Handel erhältlich. Die Herstellung von Fettsäuren ist dem Fachmann jedoch auch grundsätzlich bekannt Fettsäuren können sowohl aus Naturstoffen isoliert als auch synthetisch hergestellt werden. Niedere Fettsäuren werden vorzugsweise über oxidative Herstellungsverfahren, wie beispielsweise der Reppe-Syntese, Koch-Haaf-Synthese, Carbonylierungs-Reaktionen oder durch die Verseifung von Nitrilen, gewonnen. Die höheren Homologen sind am einfachsten durch Verseifung natürlicher Fette zugänglich.

Die vorgenannten Hydrophobierungsmittel können sowohl einzeln als auch im Gemisch eingesetzt werden.

Besonders gute Ergebnisse erzielt man, wenn das Hydrophobierungsmittel in einer Menge von 0,01 bis 30 Gew.%, insbesondere 0,1 bis 5 Gew.%, bezogen auf die Bindemittelzusammensetzung, enthalten ist.

Erfindungsgemäß insbesondere geeignete Bindemittel sind Harnstoff-Formaldehyd- (UF), Melamin-Harnstoff-Formaldehyd- (MUF) und Melamin-Hamstoff-Phenol-Formaldehyd (MUPF)-Harze.

Die oben genannten Bindemittel sind im Handel erhältlich.

Die Menge des eingesetzten Bindemittels ist abhängig von der Art des eingesetzten Bindemittels und der erwünschten Klebewirkung. Typischerweise beträgt die Menge des eingesetzten Bindemittels etwa 5 bis 20 Gew.%, vorzugsweise etwa 10 bis 15 Gew.%, bezogen auf die trockene Gesamtmasse des Holzwerkstoffs.

Bei derVerwendung von Harnstoff-Formaldehyd- (UF), Melamin-Hamstoff-Formaldehyd- (MUF) und Melamin-Hamstoff-Phenol-Formaldehyd (MUPF)-Harzen beträgt die Menge des eingesetzten Bindemittels vorzugsweise etwa 6 bis 16 Gew.%, besonders bevorzugt etwa 8 bis 14 Gew.%, bezogen auf das Trockengewicht des Holzwerkstoffs.

Die Aushärtung der eingesetzten Bindemittel erfolgt zweckmäßigerweise unter Verwendung eines Härtungsmittels, gegebenenfalls unter Erhitzen. Geeignete Härtungsmittel sind beispielsweise saure Verbindungen oder Verbindungen, die beim Vermischen mit dem Harz Säure freisetzen. Besonders geeignete Härtungsmittel sind Ammoniumsalze starker Säuren wie beispielsweise Ammoniumchlorid oder Ammoniumsulfat.

Unter Holzfasem und/oder Holzpartikeln werden erfindungsgemäß alle Lignozellulose enthaltenden Körper verstanden, die zur Herstellung von Holzwerkstoffen geeignet sind.

Zweckmäßigerweise werden die erfindungsgemäßen Holzfasem und/oder Holzpartikel aus Weichholzarten wie beispielsweise Hölzern der Fichte, Kiefer, Tanne, Lärche, Birke, Erle, Rosskastanie, Föhre, Espe, Weide, Pappel und Linde gewonnen. Es können aber auch Hartholzarten wie beispielsweise Buche, Weißdom, Schlehe, Esche, Ahorn, Nussbaum, Apfelbaum, Birnbaum, Eibe oder Eiche eingesetzt werden. Auch Mischungen beliebiger Weichholzarten mit Hartholzarten können verwendet werden.

Weiter ist es möglich, als Holzfasern und/oder Holzpartikel pflanzliche Fasern, beispielsweise aus Baumwolle, Jute, Flachs, Hanf, Bast, Sisal, Ramie, Kokos, Yucca oder Manila oder auch chemisch modifizierte Fasem wie die Viskosefasern Reyon und Zellwolle, Cuoxamfasem, Acetatfasern und Papier-und Zellstoffgame einzusetzen.

Zweckmäßigerweise sind die erfindungsgemäß eingesetzten Holzfasem und/oder Holzpartikel spanartige, faserartige, partikuläre oder staubartige Holzmaterialien. Beispielsweise können als Holzpartikel Hackspäne verwendet werden.

Vorzugsweise werden die erfindungsgemäßen Holzfasem und/oder Holzpartikel mit Teilchengrößen von maximal 5 mm Dicke, 50 mm Bereite und 150 mm Länge eingesetzt. Bevorzugt ist ein Dickenbereich von 0,5 bis 3 mm, ein Breitenbereich von 1 bis 15 mm und ein Längenbereich von 3 bis 40 mm.

Darüber hinaus besteht die Möglichkeit, dass der erfindungsgemäße Holzwerkstoff zur Eigenschaftsverbesserung geeignete Zusatzstoffe enthält Beispielsweise Zusatzstoffe, die den Holzwerkstoffen Resistenz gegenüber biologischen Schädigungen verleihen.

So kann den Holzfasern und/oder Holzpartikeln ein Pilzschutzmittel zugefügt werden. Soll eine Holzfaserplatte oder eine Spanplatte hergestellt werden, lagert das Pilzschutzmittel sich vorteilhafterweise beim Verpressen in den Deckschichtbereichen ab. Ein besonders geeignetes Pilzschutzmittel ist Borsäure.

Hervorzuheben ist in diesem Zusammenhang auch die Beimengung von Chemikalien, die die Brandbeständigkeit und/oder den Formaldehydgehalt der Holzfaserplatten reduzieren. Letzteres beispielsweise durch die Beimengung von Harnstoff oder Ammoniumcarbonat.

Hervorzuheben ist auch die Zugabe von Wasser als technologischen Hilfsstoff zu den beleimten oder unbeleimten Holzfasern und/oder Holzpartikeln. Das beigegebene Wasser verdampft beim Verpressen nach innen, kondensiert dort und bewirkt auf diese Weise einen beschleunigten und verstärkten Wärmetransport zur Plattenmitte hin, was zu einer Erhöhung der spezifischen Herstellungsleistung derartiger Holzwerkstoffe führt.

Selbstverständlich können gleichzeitig mehrere der vorstehend aufgeführten technischen Zusatzstoffe in beliebiger Kombination beigemengt werden.

Die Mengen der zu verwendenden Zusatzstoffe hängen von der Art der jeweils eingesetzten Zusatzstoffe ab und sind dem Fachmann grundsätzlich bekannt. Üblicherweise werden etwa 0,05 bis etwa 5 Gew.%Zusatzstoff bezogen auf das Trockengewicht des Holzwerkstoffs verwendet.

Zu geeigneten Obertlächenbehandlungsmitteln gehören beispielsweise Pigmente, Harzüberzüge und Laminierblätter bzw. -bögen.

Das zugesetzte Hydrophobierungsmittel verleiht dem Holzwerkstoff hydrophobe Eigenschaften.

Über die erfindungsgemäße Lehre können die verschiedensten Arten von Holzwerkstoffen hergestellt werden. Besonders geeignet ist die erfindungsgemäße Lehre zur Herstellung von Platten, wie beispielsweise Spanplatten, Faserplatten, insbesondere MDF- und HDF-Platten sowie OSB-Platten.

Unter MDF-Platten werden erfindungsgemäß Faserplatten mit Rohdichten bis zu etwa 800 kg/m³ verstanden. MDF-Platten werden unterteilt in Platten mit Rohdichten von etwa 650 kg/m³ bis etwa 800 kg/m³, Leicht-MDF (L-MDF) mit Rohdichten von ≤ 650 kg/m³ und Ultraleicht-MDF (UL-MDF) mit Rohdichten von ≤ 550 kg/m³ [DIN EN 316].

Unter HDF werden erfindungsgemäß Faserplatten hoher Dichte mit Rohdichten über 800 kg/m³ verstanden.

Unter OSB-Platten (Oriented Strand Board) werden erfindungsgemäß orientierte strukturierte Spanplatten verstanden, die aus mehreren Schichten zusammengefügt sind.

Erfindungsgemäß besonders bevorzugte Holzwerkstoffe sind Spanplatten und Faserplatten.

Der Aufbau und die Herstellung von Span- und Faserplatten ist dem Fachmann grundsätzlich bekannt und die Platten können im Rahmen der Erfindung z.B. wie folgt hergestellt werden. Unter Spanplatten werden Platten aus mechanisch produzierten Spänen aus Holz oderverholzten Teilen verstanden, die durch Verleimen mit einem Bindemittel unter Pressdruck hergestellt werden. Vor der Verleimung werden die Späne vorzugsweise getrocknet, so dass sie einen Feuchtigkeitsgehalt von weniger als 5 % aufweisen. Im Anschluss daran kann eine durchgängige oder getrennte Beleimung von Deck-undMittelschichtfraktionen erfolgen. Überspezielle Streumaschinen kanndann kontinuierlich ein Spanvlies ausgebildet werden, welches homogen aufgebaut sein kann oder aus mehreren Schichten besteht, z. B. aus zwei Deckschichten und einer Mittelschicht. Vor dem Heißpressen kann eine kontinuierliche Spanvlies-Vorverdichtung und das Besäumen des Randbereiches erfolgen.

Die eigentliche Plattenherstellung kann in Pressanlagen stattfinden, in denen über eine definierte Presszeit-, Pressdruck-und Presstemperatursteuerung die Aushärtung des Leimharzes und das Pressen auf Enddicke erfolgt Die Temperaturen beim Pressen können an der Plattenober- und-unterseite bis ca. 260°C, der Druck bis 10 MPa erreichen. Nach der Heißpresse werden die Platten in der Regel auf Länge gesägt, in speziellen Kühlwendem abgekühlt und auf Nenndicke geschliffen. Im Anschluss daran kann eine Lagerung, die zu einer Konditionierung der Platten führt, erfolgen. Falls erwünscht, können die Platten im Anschluss daran auch beschichtet werden.

Durch Größe, Form und Anordnung der Späne und der Menge des Bindemittelanteils (vorzugsweise etwa 5-15%) können die Eigenschaften der Holzspanplatten variiert werden. Beispielsweise können hochwertige Platten dadurch erhalten werden, dass ihre Herstellung mehrschichtig und mit besonders feinen Deckspänen erfolgt

Holzfaserplatten können aus Holzfasern oder anderem geeigneten lignozellulosehaltigem Material hergestellt werden. Durch Einwirkung von wärme. Feuchtigkeit und mechanischer Druckkraft in Zerfaserungsanlagen gelingt es, das Lignin, Zellulose, und hamizelluloseenthaltende Rohmaterial in seine faserartigen, anatomischen Grundelemente In der Form von Elnzelfasern und Faserbündein zu zerlegen. Im Laufe des Herstellungsprozesses wird dabei das Fasermaterial geformt, verdichtet und gepresst. Hierbei werden primär die Vertilzung der Fasern und die natürlichen Bindekräfte genutzt

Im Anschluss an die Zerfaserung erfolgt dann Oblicherweise in einer sogenannten Blasleitung (Blow-line) die Zugabe der in Wasser dispergierten Bindemittel und der Transport zum Trockner. Optional ist es auch möglich, einen Teil oder die Gesamtheit des erforderlichen Bindemittels In einem der Trocknung nachgeschalteten Prozess, beispielsweise während der sogenannten Trockenbeleimung, zuzugeben. Die beleimten Fasern werden vorzugsweise auf einen Zielfeuchtegehalt bis zu etwa 20 % heruntergetrocknet. Anschließend kann nach einer Sichtung Ober spezielle Streumaschinen dann die Ausbildung des Faservlieses erfolgen, welches dem angestrebten homogenen Charakter entsprechend vorzugsweise einschichtig ausgebildet ist. Die weitere Technologie entspricht in etwa der der oben beschriebenen Spanplattenherstellung.

Über den Faserstoffaufschluss, die Auswahl des Bindemittels, das Temperatur-, Druck-, Zeit-Regime beim Pressvorgang können die Platteneigenschaften dem Anwendungsprofil angepasst werden. In der Regel haben die Platten eine hochverdichtete Deckzone von etwa 1 mm Dicke, während sie in der Mitte lockerer gepackt sind. Aus dekorativen Gründen und zum Schutz gegen mechanische und chemische Beanspruchungen können die Holzwerkstoffe beschichtet worden. Vorzugsweise findet eine Beschichtung mit organischen Überzügen statt.

Das Beschrieben Verfahren zur Herstellung der Holzwerkstoffe ist dadurch gekennzeichnet, dass eine ungesättigte Fettsäure als Hydrophobierungsmittel eingesetzt wird.

Welche Holzfasern und/oder Holzpartikel, Bindemittel, Hydrophobierungsmittel und gegebenenfalls Zusatzstoffe erfindungsgemäß geeignet sind, wurde bereits oben diskutiert

Das Aufbringen von Bindemittel und Hydrophobierungsmitteln auf die Holzfasern und/oder Holzpartikel kann auf jede geeignete Art vorgenommen werden. Vorzugsweise werden Düsen verwendet

Gemäß einer bevorzugten Ausführungsform wird das Bindemittel in Form einer Emulsion oder Dispersion gemeinsam mit dem Hydrophoblerungsmittel zu den Holztasern und/oder Holzpaltikeln zugegeben.

Vorzugsweise werden die vorgenannten Misch- und Reaktionsschritte zur Herstellung der Formkörper bei Temperaturen von 10 bis 30°C, insbesondere bei Raumtemperatur (18-25°C) durchgeführt.

Werden als Holzausgangsmterial Späne eingesetzt, so können die beleimten Späne zweckmäBigerweise zu Spanplatten geformt und anschließend gepresst werden.

Werden Fasern verwendet, so werden die beleimten Fasern vorzugsweise zu Fasermatten geformt und anschließend unter Wärme und Druck zu Faserplatten fertig gepresst.

Geeignete Presstemperaturen beider Faser- und Spanplattenhersteltung liegen zwischen etwa 150 und230°C. Geeignete Pressdrücke liegen zwischen etwa 2 und 10 MPa.

Im beschriebenen Verfahren beträgt die Reaktionszeit in der Form und somit die Bildung des Formkörpers, vorzugsweise etwa 5 bis 16 Sekunden je mm Platenstärke, besonders bevorzugterweise etwa 8 bis 12 Sekunden.

Während des Pressvorgangs geht das eingebrachte Bindemittel üblicherweise durch Härtung in einen wasserunlöslichen Zustand über.

Die gepressten Platten können entweder wie durch die Pressung erhalten eingesetzt werden oder zur Entiernung der Presshaut und zur Erzeugung einer beschichtungsfähigen oder lackierfähigen Oberfläche nach dem Pressvorgang geschliffen werden.

Zwischen Presseinrichtung und Formkörper kann ein Trennmittel vorgesehen werden, um ein Lösen des Holzwerkstoffs vom Stahlband zu erleichtem.

Sollen die erfindungsgemäßen Holzwerkstoffe im Möbelbau eingesetzt werden, können diese zu Dekorationsoder auch Schutzzwecken zusätzlich mit Dekorfilmen, Grundierfilmen und Furnieren beschichtet werden.

Der erfindungsgemäße Holzwerkstoff kann ferner z. B. zur Stabilisierung Gewebe. Gelege, Gewirke, Drähte, Kabel, Drahtnetze, Stangen oder Ähnliches enthalten.

### Beispiel 1 (nicht erfindungsgemäß)

In diesem Beispiel wird die Herstellung und Verwendung eines Fettsäureamids beschrieben.

200 g einer technischen Fettsäure werden mit 41 g Harnstoff und 1 g Borsäure als Katalysator gemischt und für 2 Stunden auf 140°C geheizt. Anschließend wird die Reaktion zum Säureamid bei 180°C solange fortgesetzt, bis eine Säurezahl kleiner 40 erreicht wird.
Das so erhaltene Produkt wird 15%ig in Formaldehyd bei etwa 60°C emulgiert. Nicht emulgierbare restliche Fettsäure kann nötigenfalls noch durch Abtrennen der oberen Phase entfernt werden.

Das so erhaltene Produkt wird mit einem typischen Harnstoff-Formaldehyd-Leim abgemischt und mit MDF-Fasern zu einer MDF-Platte verpresst.

Das erhaltene Produkt weist die gleichen mechanischen Eigenschaften wie eine Standard-Platte mit "klassischer Hydrophobierung' (Paraffin-Emulsion) auf, die Quellungseigenschaften sind jedoch deutlich verbessert.

Die entstehenden Fettsäureamide können pur oder als Emulsion eingesetzt werden. Die selbstemulgierende Wirkung kann durch Methylolierung mittels Formaldehyd noch verbessert werden.

Ohne sich auf einen bestimmten Wirkungsmechanismus festzulegen kann die Verankerung der hydrophoben Komponente an die Leimharz-Struktur wie folgt exemplarisch über das mittels Formaldehyd methylolierte Zwischenprodukt dargestellt werden:

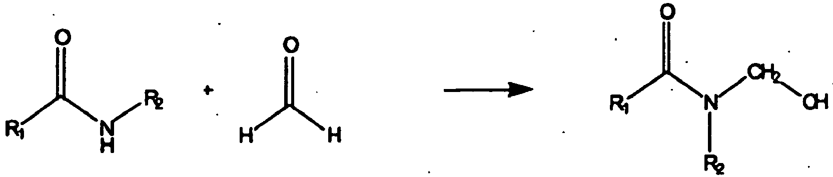

Mit einem Bindemittel (hier beispielhaft ein Bindemittel auf der Basis von Hamstoff-Formaldehyd) können dabei Strukturen der folgenden Art gebildet werden: 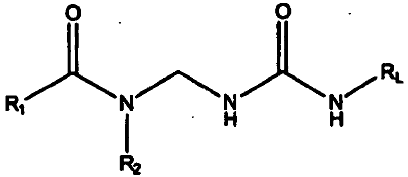
R1 = hydrophober Rest aus der Fettsäure
R2 = Rest aus dem eingesetzten Amin (kann auch H sein)
RL = Rest Leimharz

### Beispiel 2 (nicht erfindungsgemäß)

Ungesättigte Fettsäuren können durch Addition molekularen oder chemisch gebundenen Sauerstoffs an die Doppelbindungen epoxidiert werden. Die Epoxidgruppe ist unter anderem in der Lage, mit den NH₂-Gruppen im Bindemittel zu reagieren und das hydrophobe System ans Harz zu binden.

## Patentansprüche

1. Bindemittelzusammensetzung zur Verleimung von Holzfasern und/oder -partikeln zu einem Holzwerkstoff, **dadurch gekennzeichnet, dass** die Bindemittelzusammensetzung ein Reaktionsprodukt aus
- mindestens einem aminoplastbasierenden Bindemittel und
- mindestens einer ungesättigte Fettsäure als Hydrophobierungsmittel
enthält.

2. Bindemittelzusammensetzung gemäß Anspruch 1, **dadurch gekennzeichnet, dass** das Hydrophobierungsmittel in einer Menge von 0,01 bis 30 Gew.%, insbesondere 0,1 bis 5 Gew.%, bezogen auf die Leimzusammensetzung, enthalten ist.

3. Holzwerkstoff, erhältlich durch Verleimen von Holzfasern und/oder Holzpartikeln mit einer Bindemittelzusammensetzung gemäß einem der Ansprüche 1 oder 2.

4. Holzwerkstoff gemäß Anspruch 3, **dadurch gekennzeichnet, dass** der Holzwerkstoff eine Spanplatte, Faserplatte, insbesondere eine MDF- oder eine HDF-Platte, und/oder eine OSB-Platte ist.

5. Holzwerkstoff gemäß Anspruch 3 oder 4, **dadurch gekennzeichnet, dass** der Holzwerkstoff hydrophobe Eigenschaften besitzt.

## Claims

1. Binder composition for gluing wood fibres and/or particles in wood material, **characterized in that** the binder composition contains a reaction product consisting of
- at least one aminoplast-based binder and
- at least one unsaturated fatty acid as hydrophobic additive.

2. Binder composition according to claim 1, **characterized in that** the hydrophobic additive is contained in a quantity of 0.01 to 30% by weight, particularly 0.1 to 5 % by weight, related to the glue composition.

3. Wood material, obtainable by gluing wood fibres and/or wood particles with a binder composition according to any one of claims 1 or 2.

4. Wood material according to claim 3, **characterized in that** the wood material is chip board, fibre board, particularly MDF or HDF board, and/or OSB board.

5. Wood material according to claim 3 or 4, **characterized in that** the wood possesses hydrophobic properties.

## Revendications

1. Composition d'agent liant pour collage de fibres et/ou de particules de bois en un matériau à base de bois, **caractérisée en ce que** la composition d'agent liant contient un produit de réaction de
- au moins un agent liant à base d'aminoplaste et
- au moins un acide gras insaturé comme agent hydrophobe.

2. Composition d'agent liant selon la revendication 1, **caractérisée en ce que** l'agent hydrophobe est présent en quantité de 0,01 à 30 % en poids, en particulier 0, 1 à 5 % en poids, par rapport à la composition de la colle.

3. Matériau à base de bois, obtenu par collage de fibres de bois et/ou de particules de bois avec une composition d'agent liant selon l'une des revendications 1 ou 2.

4. Matériau à base de bois selon la revendication 3, **caractérisé en ce que** le matériau à base de bois est un panneau de copeaux, un panneau de fibres, en particulier un panneau MDF ou HDF, de mêmes qu'un panneau d'OSB.

5. Matériau à base de bois selon la revendication 3 ou 4, **caractérisé en ce que** le matériau à base de bois possède des propriétés hydrophobe.
